**Europäisches Patentamt**

**European Patent Office**

**Office européen des brevets**

(11) Numéro de publication: **0 077 272**
**B1**

(12) **FASCICULE DE BREVET EUROPEEN**

(45) Date de publication du fascicule du brevet:
**19.02.86**

(21) Numéro de dépôt: **82401869.1**

(22) Date de dépôt: **12.10.82**

(51) Int. Cl.⁴: **F 16 B 37/00,** F 16 B 33/00,
**B 29 D 1/00**

(54) Organe de liaison à trou taraudé.

(30) Priorité: **12.10.81 FR 8119150**

(43) Date de publication de la demande:
**20.04.83 Bulletin 83/16**

(45) Mention de la délivrance du brevet:
**19.02.86 Bulletin 86/8**

(84) Etats contractants désignés:
**AT BE CH DE GB IT LI NL SE**

(56) Documents cités:
**FR - A - 1 062 703**
**FR - A - 1 275 038**
**US - A - 3 495 494**

(73) Titulaire: **PERMALI S.A., 8 rue A. Fruchard,**
**F-54320 Maxeville (FR)**

(72) Inventeur: **Boiteux, Jean-Claude, 75 Boulevard de**
**Champelle, F-54600 Villers Les Nancy (FR)**

(74) Mandataire: **Lemoine, Michel et al, Cabinet Michel**
**Lemoine 13 Boulevard des Batignolles, F-75008 Paris**
**(FR)**

## Description

L'invention est relative aux organes de liaison qui sont destinés à relier des pièces l'une à l'autre en étant ainsi soumis à des efforts de traction et/ou de flexion et qui sont munis, au niveau de l'une au moins de leurs extrémités de forme extérieure cylindrique, d'un trou taraudé généralement selon l'axe moyen de ces efforts. Ce trou taraudé reçoit un élément solidaire de l'une des pièces à relier et muni d'un filetage extérieur compatible avec le filetage intérieur du trou taraudé.

De tels organes de liaison sont habituellement en métal et présentent donc, dans de nombreuses applications, les inconvénients inhérents aux métaux: absence d'isolation électrique et/ou thermique, risques de corrosion, dilatation et contraction excessives ou incompatibles avec celles de l'élément fileté, etc . . .

On connait des articles filetés en matière plastique qui sont rentorcés par des fibres de verre (US-A-3495494) ou bien par une frette (FR-A-1062703).

L'invention a pour but de remédier aux inconvénients précités. Elle a également pour but de créer des organes de liaison qui se distinguent par une résistance à la rupture en traction et/ou flexion particulièrement élevée.

Pour atteindre l'un au moins de ces buts, l'organe de liaison conforme à l'invention est caractérisé en ce qu'il est constitué d'un matériau stratifié à couches planes ou approximativement planes, parallèles à l'axe du trou taraudé, et d'une frette de rigidité telle que sa déformation radiale soit la plus faible possible, cette frette entourant la susdite extrémité cylindrique soit sur la totalité de la hauteur du trou taraudé, soit de préférence seulement sur la partie de cette hauteur qui avoisine l'extrémité ouverte ou libre de ce trou.

On sait que les matériaux stratifiés plans se distinguent de la plupart des métaux ou matériaux isotropes par leur état anisotropique que leur confère leur constitution à partir de couches élémentaires minces d'un même matériau de base ou de plusieurs matériaux de base, ces couches pouvant présenter des caractéristiques identiques ou différentes dans les directions principales de leurs plans.

Ces couches élémentaires, imprégnées ou enduites de résine ou «matrice», sont stratifiées sous forme de plaques (ou planches) planes ou faiblement incurvées (en segment cylindrique ou en calotte sphérique, par exemple), à chaud ou à froid sous forte ou faible pression. Les matériaux stratifiés ainsi réalisés peuvent être considérés comme des matériaux orthotropes qui se caractérisent par le fait que leurs principales caractéristiques mécaniques ont, dans la direction des axes principaux, des diagrammes polaires en forme de cercle ou d'autres courbes, suivant que les valeurs de rupture sont égales ou différentes. Il y a lieu cependant d'établir une distinction entre les deux axes principaux du matériau stratifié, d'une part, et son troisième axe (épaisseur) d'autre part, dont les caractéristiques mécaniques sont liées directement à celles du système résineux utilisé pour lier entre elles les couches élémentaires du matériau stratifié. Selon l'invention, c'est ce troisième axe que l'on oriente perpendiculairement à l'axe du trou taraudé de l'organe de liaison, c'est-à-dire perpendiculairement aux efforts de traction appliqués à cet organe.

Comme matériaux stratifiés, on utilise de préférence, selon l'invention, des complexes réalisés à partir de couches élémentaires à base de fibres sous forme de mats ou tissus ou autres, liées ensemble par de la résine. Toutefois, l'invention n'est pas limitée aux matériaux stratifiés de ce genre mais englobe en particulier tous les stratifiés ou matériaux composites renforcés à base de fibres à hautes caractéristiques mécaniques telles que: verre, Kevlar, carbone, etc . . . en liaison avec des systèmes résineux adéquats tels que résine époxy, polyester, polyimide etc . . .

L'invention va être maintenant décrite plus en détail à l'aide des modes de réalisation qui sont représentés à titre d'exemples aux dessins annexés.

La figure 1 représente, en perspective avec parties coupées, la partie supérieure d'un organe de liaison conforme à un premier mode de réalisation.

La figure 2 représente, en perspective avec parties coupées, un organe de liaison conforme à un deuxième mode de réalisation.

La figure 3 représente, en perspective, un organe de liaison conforme à un troisième mode de réalisation.

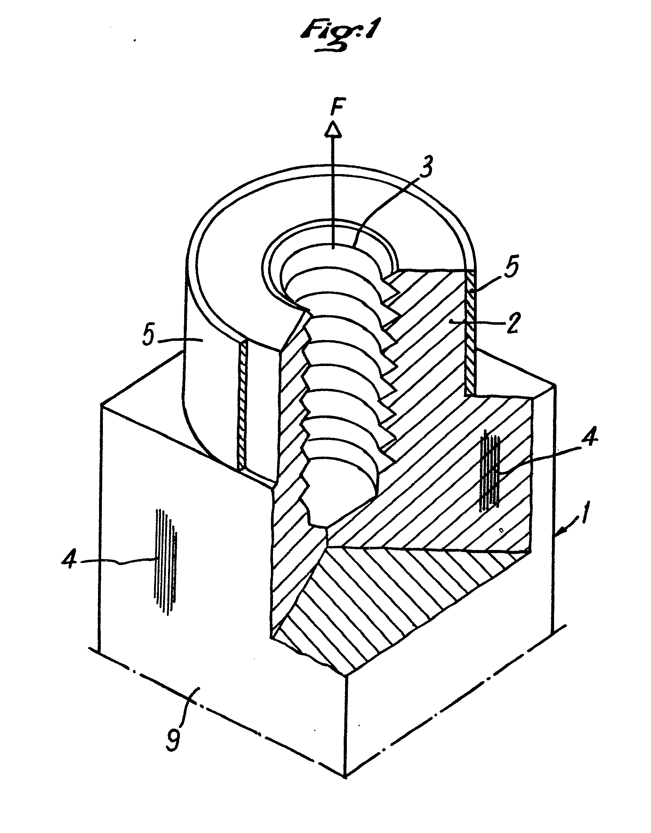

L'organe de liaison 1, dont la partie supérieure est représentée à la figure 1, est destiné à relier deux pièces (non montrées) l'une à l'autre en étant ainsi soumis à des efforts de traction symbolisés par la flèche F. Au moins au niveau de son extrémité représentée 2, dont la forme extérieure est cylindrique, cet organe de liaison est muni d'un trou taraudé 3 dont l'axe coïncide avec l'axe moyen des efforts de traction. Ce trou taraudé 3 est destiné à recevoir un élément solidaire de l'une des susdites pièces et muni d'un filetage extérieur approprié. Cet élément peut être constitué par une tige séparée de cette pièce ou faisant corps avec celle-ci.

Selon l'invention, l'organe de liaison 1 est constitué d'un matériau stratifié à couches planes (schématisées par des lignes parallèles 4), parallèles à l'axe du trou taraudé 3, et d'une frette ou bague circulaire 5 entourant l'extrémité 2. Cette frette 5 est d'une rigidité telle que sa déformation radiale soit la plus faible possible sous l'effet d'efforts radiaux.

Le diamètre intérieur de cette frette, c'est-à-dire le diamètre extérieur de l'extrémité cylindrique 2, est déterminé en fonction des critères de résistance à la rupture en traction, en tenant compte des concentrations de contraintes dues aux filetages du trou taraudé 3 et des charges à rupture de référence dans les axes considérés. L'épaisseur de cette frette 5 est calculée en fonction de la pression interne résultante du système, mais aussi des possibilités d'exécution de cette frette et de ses caractéristiques mécaniques propres.

Bien que la frette 5 puisse être faite de métal, il est préférabel de la constituer en un système résineux armé, de préférence en un système résineux analogue ou identique à celui du reste de l'organe de liaison 1. Dans le cas d'un système résineux armé, l'armature de ce système est avantageusement constituée de fibres, à hautes caractéristiques mécaniques, notamment en verre ou carbone, Kevlar, etc . . . enroulées en cercles ou en hélices, et éventuellement reliées par des fibres parallèles à l'axe ou légèrement inclinées par rapport à celui-ci.

Bien qu'elle puisse s'étendre sur toute la hauteur du trou taraudé 3, la frette 5 s'étend de préférence seulement sur la partie de cette hauteur qui avoisine l'extrémité ouverte ou libre de ce trou, ainsi qu'il ressort de la figure 1.

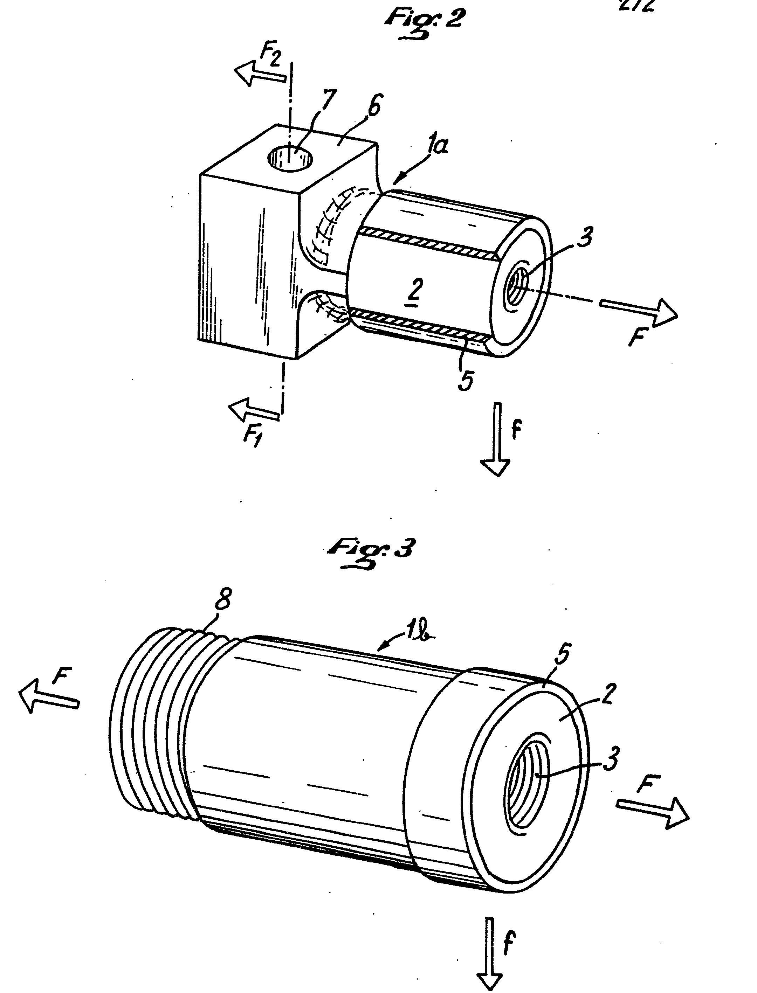

Pour que l'organe de liaison 1 puisse être relié par sa partie inférieure à l'autre pièce définie ci-dessus, cette partie inférieure peut être constituée de la même façon que la partie supérieure représentée à la figure 1, d'une façon plus ou moins symétrique par rapport au plan de coupe schématisé par deux droites en trait mixte. Cette partie inférieure peut également avoir une conformation différente dont deux exemples, sans aucun caractère restrictif, sont illustrés aux figures 2 et 3.

L'organe de liaison 1a de la figure 2 est conformé à sa partie droite comme à la figure 1. A sa partie gauche, cet organe de liaison 1a comprend un bloc 6, formé d'une seule pièce avec la partie cylindrique 2 et traversé par un trou 7, perpendiculaire au trou taraudé 3 et destiné à recevoir une tige de liaison (non montrée), laquelle est soumise aux efforts de traction $F_1$ et $F_2$ dont la résultante est opposée à la force F. Le bloc 6 peut avoir une forme parallélé-pipédique, comme représenté, ou toute autre forme convenant à l'application envisagée.

L'organe de liaison 1b de la figure 3 est conformé à sa partie droite comme à la figure 1. A sa partie gauche, cet organe de liaison 1b comporte une extrémité filetée extérieurement 8, opposée et coaxiale à l'extrémité 2.

Pour faciliter le vissage, l'organe de liaison conforme à l'invention peut posséder une surface latérale polygonale, par exemple une surface latérale de section carrée 9 comme l'organe de liaison 1 de la figure 1, pour permettre l'engagement d'une clé de serrage.

Pour fabriquer un tel organe de liaison, on prélève, sur une plaque de matériau stratifié à couches planes ou approximativement planes, une ébauche dont la forme extérieure correspond, aux retouches éventuelles près, à celle de l'organe de liaison. Puis à l'extrémité cylindrique 2 de cette ébauche, on met en place la frette 5, après quoi seulement on exécute les opérations de perçage et de taraudage du trou 3 (ou des trous 3 alignés), de façon que cette frette reprenne les résultantes des efforts de perçage et de taraudage.

On constate que l'organe de liaison conforme à l'invention et tel que 1, 1a ou 1b est doté d'une résistance à la traction d'une valeur exceptionnelle, malgré la faible résistance à la traction que possède le matériau stratifié dans la direction perpendiculaire à ses couches élémentaires. En outre, ces organes possèdent une très grande résistance en compression. L'organe 1b de la figure 3 possède en plus une excellente résistance à la rupture en flexion pure (suivant f), mais aussi en flexion/traction et flexion/compression (ces contraintes résultant d'efforts non axiaux et non orthogonaux).

C'est ainsi par exemple que, pour un organe de liaison 1 constitué de deux moitiés identiques à celles de la figure 1, c'est-à-dire à deux extrémités femelles et ayant les caractéristiques suivantes:
- composition du matériau stratifié: verre/époxy;
- composition des frettes 5: tube époxy;
- longueur de l'organe: L en mm;
- diamètre extérieur des frettes: D en mm;
- épaisseur des frettes: e en mm;
- hauteur des frettes: g en mm;
- profondeur des trous taraudés: h en mm;
- diamètre des fonds de filets: d en mm;

on a obtenu les valeurs de résistances à la rupture en traction T en daN, (et compression) paraissant dans le tableau suivant:

| L | D | e | g | h | d | T |
|---|---|---|---|---|---|---|
| 30 | 15 | 1,5 | 6 | 9 | 6 | 790 |
| 40 | 19 | 1,5 | 8 | 12 | 8 | 1 700 |
| 50 | 23 | 1,5 | 10 | 15 | 10 | 2 350 |
| 60 | 28 | 2,0 | 12 | 18 | 12 | 3 600 |
| 70 | 32 | 2,0 | 14 | 21 | 14 | 5 620 |
| 80 | 36 | 2,0 | 16 | 24 | 16 | 7 500 |
| 90 | 40 | 2,0 | 18 | 27 | 18 | 9 600 |
| 100 | 45 | 2,5 | 20 | 30 | 20 | 10 000 |
| 120 | 53. | 2,5 | 24 | 36 | 24 | 13 600 |

Avec un organe de liaison 1a tel que représenté sur la figure 2, de mêmes matériaux et ayant les dimensions suivantes:
- longueur de l'organe: 65 mm;
- diamètre extérieur de la frette: 34 mm;
- épaisseur de la frette: 2 mm;
- hauteur de la frette: 30 mm;
- profondeur du trou taraudé: 35 mm;
- diamètre du trou taraudé: 16 mm;
- diamètre du trou 7: 12 mm;
- dimensions de la partie 6: selon l'axe du trou 7, 40 mm; selon l'axe du trou taraudé, 25 mm; perpendiculairement aux deux axes, 30 mm;

on a obtenu une résistance à la rupture en traction de 5950 daN.

Avec un organe selon la figure 3, les valeurs de rupture en traction et compression sont identiques à celles d'un organe similaire de la figure 1 mais les valeurs de résistance à la rupture en flexion F en daN sont plus élevées comme le montre le tableau ci-dessous:

| L | D | e | g | h | d | r | F |
|---|---|---|---|---|---|---|---|
| 40 | 19 | 1,5 | 8 | 12 | 8 | 12 | 550 |
| 60 | 28 | 2,0 | 12 | 18 | 12 | 18 | 1250 |
| 70 | 32 | 2,0 | 14 | 21 | 14 | 21 | 1700 |

r étant la hauteur du filetage 8 en mm.

Bien entendu, les organes selon l'invention peuvent être prévus pour relier plus de deux pièces entre elles. Ainsi, des organes peuvent par exemple présenter les formes d'un polygone quelconque avec, sur certaines faces au moins, des trous taraudés entourés de frettes et dont les axes sont perpendiculaires audit troisième axe de l'organe.

## Revendications

1. Organe de liaison (1,1a,1b) qui est destiné à relier au moins deux pièces l'une à l'autre en étant ainsi soumis à des efforts de traction ou de flexion et qui est muni, au niveau de l'une au moins de ses extrémités (2) de forme extérieure cylindrique, d'un trou (3) taraudé selon l'axe moyen de ces efforts, caractérisé en ce qu'il est constitué d'un matériau stratifié à couches planes ou approximativement planes (4), parallèles à l'axe du trou taraudé (3) et d'une frette (5) de rigidité telle que sa déformation radiale soi la plus faible possible, cette frette (5) entourant la susdite extrémité cylindrique (2) sur une partie au moins de la hauteur du trou taraudé (3).

2. Organe de liaison selon la revendication 1, caractérisé en ce que la frette (5) n'entoure l'extrémité cylindrique (2) que sur la partie de la hauteur du trou taraudé (3) qui avoisine son extrémité ouverte.

3. Organe de liaison selon l'une des revendications 1 et 2, caractérisé en ce que le matériau stratifié est un complexe renforcé à base de fibres à hautes caractéristiques mécaniques.

4. Organe de liaison selon l'une quelconque des revendications 1 à 3, caractérisé en ce que la frette est constituée en un système résineux armé.

5. Organe de liaison selon la revendication 4, caractérisé en ce que la frette est constituée en un système résineux armé analogue ou identique à celui du reste de l'organe de liaison (1, 1a, 1b).

6. Organe de liaison selon la revendication 5, caractérisé en ce que le système résineux de la frette est armé par des fibres à hautes caractéristiques mécaniques, enroulées en cercles ou en hélices.

7. Organe de liaison selon l'une quelconque des revendications 1 à 6, caractérisé en ce qu'il comporte également au moins une extrémité filetée (8).

8. Procédé de fabrication d'un organe de liaison selon l'une quelconque des revendications 1 à 7, caractérisé en ce qu'on prélève, sur une plaque de matériau stratifié à couches planes ou approximativement planes, une ébauche dont la forme correspond au moins approximativement à celle de l'organe de liaison (1, 1a, 1b); en ce qu'on met ensuite la frette (5) en place; après quoi seulement on exécute les opérations de perçage et de taraudage du trou (3).

## Patentansprüche

1. Verbindungselement (1, 1a, 1b) zum Verbinden wenigstens zweier Teile miteinander, wobei das Verbindungselement Zug- oder Biege-Beanspruchungen unterworfen ist und in der Höhe wenigstens eines seiner Enden (2) von äusserer zylindrischer Form mit einer Gewindebohrung (3) gemäss der mittleren Achse der Zug- bzw. Biegebeanspruchungen versehen ist, dadurch gekennzeichnet, dass das Verbindungselement aus einem beschichteten Material mit ebenen oder angenähert ebenen Schichten (4), die parallel zur Achse der Gewindebohrung (3) verlaufen, und aus einer Zwinge bzw. einem Bundring (5) mit einer derartigen Steifigkeit besteht, dass eine geringstmögliche radiale Verformung der Zwinge bzw. des Bundrings eintritt, wobei die Zwinge bzw. der Bundring (5) das zylindrische Ende (2) des Verbindungselementes (1, 1a, 1b) zumindest über einen Teil der Länge der Gewindebohrung (3) umgibt.

2. Verbindungselement nach Anspruch 1, dadurch gekennzeichnet, dass die Zwinge bzw. der Bundring (5) das zylindrische Ende (2) des Verbindungselementes (1, 1a, 1b) lediglich über den Teil der Länge der Gewindebohrung (3) umgibt, welcher an das offene Ende der Gewindebohrung (3) angrenzt.

3. Verbindungselement nach einem der Ansprüche 1 und 2, dadurch gekennzeichnet, dass das beschichtete Material aus einem auf der Basis von Fasern mit hohen mechanischen Eigenschaften verstärkten Komplex besteht.

4. Verbindungselement nach einem der Ansprüche 1 bis 3, dadurch gekennzeichnet, dass die Zwinge bzw. der Bundring (5) aus einem verstärkten harzartigen System besteht.

5. Verbindungselement nach Anspruch 4, dadurch gekennzeichnet, dass die Zwinge bzw. der Bundring (5) aus einem verstärkten harzartigen System besteht, das ähnlich oder gleich demjenigen des übrigen Bestandteiles des Verbindungselementes (1, 1a, 1b) ist.

6. Verbindungselement nach Anspruch 5, dadurch gekennzeichnet, dass das harzartige System, aus dem die Zwinge bzw. der Bundring (5) besteht, durch Fasern mit hohen mechanischen Eigenschaften verstärkt ist, wobei diese Fasern kreisförmig oder wendelförmig aufgewickelt sind.

7. Verbindungselement nach einem der Ansprüche 1 bis 6, dadurch gekennzeichnet, dass es ebenfalls wenigstens ein Ende mit Aussengewinde (8) aufweist.

8. Verfahren zur Herstellung eines Verbindungselementes gemäss einem der Ansprüche 1 bis 7, dadurch gekennzeichnet, dass an einer Platte aus beschichtetem Material mit ebenen oder angenähert ebenen Schichten ein Rohling abgenommen wird, dessen Form wenigstens angenähert derjenigen des Verbindungselementes (1, 1a, 1b) entspricht, dass sodann die Zwinge bzw. der Bundring (5) aufgebracht wird und dass nachfolgend die Arbeitsgänge des Bohrens und des Gewindeschneidens der Bohrung (3) ausgeführt werden.

**Claims**

1. A connecting member 1, 1a, 1b) which is adapted to connect at least two parts to one another while thus being subjected to tensile or bending stress and which is provided, at the level of at least one of its ends (2) of cylindrical external shape, with a tapped hole (3) along the mean axis of these stresses, characterised in that it consists of a laminated material with plane or approximately plane layers (4) parallel to the axis of the tapped hole (3) and of a rigidity hoop (5) such that its radial deformation is as slight as possible, this hoop (5) surrounding the said cylindrical end (2) over at least a portion of the height of the tapped hole (3).

2. A connecting member according to claim 1, characterised in that the hoop (5) only surrounds the cylindrical end (2) over the portion of the height of the tapped hole (3) which is adjacent to its open end.

3. A connecting member according to one of the claims 1 and 2, characterised in that the laminated material is a reinforced complex on a fibre base with high mechanical characteristics.

4. A connecting member according to any one of the claims 1 to 3, characterised in that the hoop consists of a reinforced resinous system

5. A connecting member according to claim 4, characterised in that the hoop consists of a reinforced resinous system similar or identical to that of the rest of the connecting member (1, 1a, 1b).

6. A connecting member according to Claim 5, characterised in that the resinous system of the hoop is reinforced with fibres having high mechanical characteristics, wound in circles or in helices.

7. A connecting member according to any one of the claims 1 to 6, characterised in that it likewise comprises at least one threaded end (8).

8. A method of producing a connecting member according to any one of the claims 1 to 7, characterised in that a blank, the shape of which corresponds at least approximately to that of the connecting member (1, 1a, 1b), is cut from a sheet of laminated material with plane or approximately plane layers; that a hoop (5) is then placed in position; and only after this are the operations of drilling and tapping the hole (3) carried out.

Fig.1

Fig. 2

Fig. 3